# FASCICULE DE BREVET EUROPEEN

(11) **EP 0 567 540 B1**
(45) Date de publication et mention de la délivrance du brevet: **31.05.1995**
(21) Numéro de dépôt: 92903834.7
(22) Date de dépôt: 10.01.1992
(51) Int. Cl.: B60R 25/02

(54) **DISPOSITIF DE SECURITE ANTI-VOL POUR VOLANT DE DIRECTION DE VEHICULE**
DIEBSTAHLSCHUTZVORRICHTUNG FÜR DAS LENKRAD EINES FAHRZEUGES
ANTI-THEFT SECURITY DEVICE FOR VEHICLE STEERING WHEEL

(30) Priorité: 14.01.1991 FR 9100326
(43) Date de publication de la demande: 03.11.1993
(73) Titulaire: MALVY, Michel, F-91194 Gif-sur-Yvette Cédex (FR)
(72) Inventeur: MALVY, Michel, F-91194 Gif-sur-Yvette Cédex (FR)
(74) Mandataire: Jaunez, Xavier
(86) Numéro de dépôt international: FR9200017
(87) Numéro de publication internationale: WO9212029

(56) Documents cités:
- EP-A- 0 008 308
- EP-A- 0 162 986
- EP-A- 0 402 938
- FR-A- 2 581 948
- US-A- 4 924 685

## Description

L'invention concerne un dispositif de sécurité anti-vol pour véhicules automobiles, associé au volant de direction du véhicule, et plus particulièrement du type apte à assurer soit la solidarisation du volant avec la colonne de direction du véhicule, soit la désolidarisation dudit volant d'avec ladite colonne.

Il existe déjà de nombreux dispositifs de sécurité anti-vol pour véhicules automobiles dont le principe général est celui d'un cran de blocage venant se loger dans un logement associé de la colonne de direction du véhicule, au niveau d'un boîtier prévu pour la clé de contact.

Ces dispositifs parviennent cependant à être détériorés en cas d'effraction et à ne plus remplir ainsi leur fonction de sécurité ; si la détérioration est insuffisante pour parvenir à déverrouiller la colonne de direction, des dommages sont néanmoins souvent causés à la colonne de direction, ainsi qu'au volant et aux éléments d'habillage du tableau de bord.

C'est ce qui a amené les concepteurs à mettre au point des systèmes permettant de désaccoupler le volant d'avec la colonne de direction.

Le document EP-A- 0 008 308 décrit un dispositif dans lequel la colonne de direction est réalisée en deux parties, l'une de ces parties étant agencée pour pouvoir être enlevée ou mise en place de façon que l'accouplement entre la colonne de direction et le volant puisse être interrompu ou respectivement rétabli. Un tel dispositif présente cependant l'inconvénient d'avoir à adapter spécialement la colonne de direction du véhicule, ce qui est coûteux. De plus, ce dispositif ne se prête pas à une adaptation rapide et fiable.

Il a été également proposé de réaliser un mécanisme anti-vol de véhicule par retrait d'une pièce de l'anti-vol, ce retrait produisant de facto un désaccouplement du volant d'avec la colonne de direction. Cet état de la technique est particulièrement bien illustré par les documents EP-A- 0 162 986 et FR-A-2.581.948.

Les dispositifs décrits dans les deux documents précités reposent sur le principe d'un empilement axial de pièces coaxiales à la colonne de direction, empilement dont l'utilisateur doit extraire une pièce qui assure un accouplement en rotation en amont et en aval de celle-ci dans ledit empilement. De tels dispositifs ont l'avantage d'être de conception relativement simple, mais nécessitent d'effectuer un démontage pour extraire une pièce (comme dans EP-A-0 162 986) ou de prévoir des moyens d'accouplement de conception plus sophistiquée pour n'avoir à dégager qu'un moyen amovible comme une goupille à billes rétractables (comme dans FR-A-2.581.948).

Le document US-A-4 924 685 décrit un dispositif de sécurité anti-vol pour volant de direction de véhicule automobile, du type apte à assurer la solidarisation ou la désolidarisation du volant d'avec la colonne de direction du véhicule, comportant :
. une embase solidaire de la colonne de direction ;
. un support de volant solidaire du volant et monté tournant sur l'embase ;
. au moins une pièce mobile d'accouplement en rotation de l'embase et du support de volant, ladite pièce étant mobile sensiblement selon l'axe de la colonne de direction entre une position d'accouplement et une position de désaccouplement ;
. un moyen de rappel tendant à ramener la pièce mobile d'accouplement dans sa position de désaccouplement ;
. une pièce de liaison mobile par l'intermédiaire d'un organe d'actionnement associé à l'intérieur du dispositif de sécurité, ladite pièce de liaison servant à maintenir la pièce mobile d'accouplement dans sa position d'accouplement, à l'encontre du moyen de rappel associé, conformément au préambule de la revendication 1.

Ce dispositif connu présente une structure complexe et fait intervenir un grand nombre de pièces mobiles, pour passer d'une position d'accouplement à une position de désaccouplement et inversement. La position de désaccouplement est en outre vulnérable dans la mesure où un tiers pourrait fracturer le voile central du bouchon fileté et forcer la pièce mobile d'accouplement à venir dans sa position basse d'accouplement. Enfin, un tel dispositif implique d'adapter spécialement la colonne de direction du véhicule, ce qui est coûteux.

L'invention a pour objet de perfectionner le dispositif précité, afin d'en éviter les inconvénients et limitations, en réalisant un dispositif qui soit à la fois simple dans sa structure en ne faisant intervenir qu'un petit nombre de pièces mobiles, qui soit très sûr au regard des tentatives d'effraction, et qui n'implique aucune modification significative de la colonne de direction du véhicule, ce qui est économique et permet de monter aisément ce dispositif sur un véhicule existant non équipé initialement d'un tel dispositif.

Ceci est atteint selon l'invention, en prévoyant, conformément à la partie caractérisante de la revendication 1, que :
. la pièce de liaison est mobile en translation dans une direction sensiblement radiale, entre une position avancée dans laquelle elle maintient la pièce mobile d'accouplement dans sa position d'accouplement, et une position reculée dans laquelle elle permet à ladite pièce mobile d'accouplement d'être maintenue par le moyen de rappel associé dans sa position de désaccouplement;
. l'organe amovible d'actionnement est insérable latéralement dans le support de volant, ledit organe permettant, lorsqu'il est inséré, d'amener la pièce de liaison mobile dans sa position avancée en vue de la solidarisation du volant avec la colonne de direction, et, lorsqu'il est extrait, d'amener ladite pièce de liaison mobile dans sa position reculée en vue de la désolidarisation dudit volant d'avec ladite colonne de direction.

Selon une caractéristique particulièrement avantageuse, la pièce mobile d'accouplement est une clavette.

Avantageusement, la clavette est montée flottante sur l'embase sans pouvoir tourner par rapport à celle-ci.

En variante, la clavette est articulée sur l'embase, autour d'un axe sensiblement orthogonal à la direction de translation de la pièce de liaison mobile. En particulier alors, le moyen de rappel associé à la clavette articulée est un ressort spiral agencé au niveau de l'axe de ladite clavette.

Selon une autre variante, la clavette est suspendue à un ressort qui assure en même temps le rappel de celle-ci en position de désaccouplement. De préférence alors, un moyen de centrage, tel qu'un appui conique, est prévu pour assurer un calage de la clavette lorsque celle-ci est en position de désaccouplement.

Il est intéressant de prévoir que le support de volant porte un couvercle central qui lui est solidaire, ledit couvercle se prolongeant vers l'intérieur du dispositif de sécurité par une extension adaptée pour coopérer avec la pièce mobile d'accouplement lorsque celle-ci est en position d'accouplement.

De préférence alors, l'extension du couvercle central supporte un ressort de rappel tendant à ramener la pièce mobile d'accouplement dans sa position de désaccouplement.

Avantageusement aussi, le couvercle central est accouplé au support de volant par un moyen de verrouillage qui est débrayable pour permettre de régler la position angulaire dudit couvercle central par rapport audit support de volant. De préférence, le moyen de verrouillage comporte au moins un téton mobile entre une position haute d'accouplement et une position basse de désaccouplement et de réglage, ledit téton comportant une denture supérieure conique pouvant coopérer pour le réglage avec une denture homologue prévue sur une couronne portée par le support de volant, et une denture inférieure cylindrique coopérant pour le verrouillage avec une denture intérieure homologue de ladite couronne, ledit téton présentant en outre une tête polygonale accessible de l'extérieur et assurant son anti-rotation en position haute dans un orifice de passage associé prévu au travers du couvercle central.

Selon un mode de réalisation avantageux, la pièce de liaison et l'organe amovible d'actionnement constituent une pièce unique se présentant sous la forme d'une clé allongée, le support de volant comportant alors une douille fixe dans laquelle est disposé un barillet tournant associé à ladite clé. Il est intéressant alors que la douille fixe présente un fond percé d'un orifice de passage dont le contour permet à ladite douille d'assurer une fonction de détrompeur.

Dans un autre mode de réalisation, la pièce de liaison est montée en bout de la tige d'un plongeur coulissant comme un piston dans une douille fixe disposée dans le support de volant, l'organe amovible d'actionnement se présentant alors sous forme d'une clé courte pouvant être insérée dans un barillet associé qui peut tourner et/ou coulisser dans ladite douille fixe pour actionner ledit plongeur. Dans une variante particulière, la pièce mobile est une clavette articulée sur l'embase ou le support de volant et est complétée par une deuxième clavette également articulée, lesdites clavettes étant agencées de telle façon que la pièce de liaison passe entre celles-ci pour les écarter l'une de l'autre en vue de l'accouplement.

Il est également intéressant que le barillet tournant soit couplé à la douille fixe de telle façon qu'une rotation de la clé insérée dans le barillet produise un avancement dudit barillet dans ladite douille, et par suite une amenée de la pièce de liaison dans sa position avancée.

En variante, le barillet tournant est prolongé par une extrémité en forme de came, et le plongeur est monté non-tournant dans la douille fixe et présente une tête en forme de came homologue de l'autre came, de telle façon qu'une rotation de la clé insérée dans le barillet produise un avancement dudit plongeur dans ladite douille, et par suite une amenée de la pièce de liaison dans sa position avancée.

Selon une autre caractéristique avantageuse, le support de volant comporte un moyen mobile de cloisonnement, capable d'obturer le passage de la pièce de liaison, ledit moyen étant seulement actionné par une rotation normale du barillet lorsque la clé a été reconnue par l'intermédiaire de moyens de décodage associés.

De préférence encore, la clé comporte des moyens de codage, et éventuellement aussi des moyens autonomes de commande à infra-rouge et d'éclairage localisé, ainsi qu'un micro-module.

Avantageusement aussi, le dispositif comporte un moyen d'indexage permettant de marquer la position du volant lorsque celui-ci est dans la position angulaire qui correspond à l'insertion de l'organe amovible d'actionnement, afin de faciliter toute nouvelle insertion dudit organe.

De préférence encore, le dispositif comporte un moyen de rappel tendant à ramener naturellement le volant dans ladite position angulaire lorsque ledit volant a été désolidarisé d'avec la colonne de direction, après extraction de l'organe amovible d'actionnement. Par exemple, le moyen de rappel est un balourd fixé latéralement sur le support de volant. En variante, le moyen de rappel est constitué par une roulette chargée par un ressort et maintenue en appui contre le fond incliné d'une gorge prévue sur une couronne solidaire de l'embase ; il est alors intéressant que le fond de la gorge présente une cuvette dans laquelle peut pénétrer la roulette, ladite cuvette étant positionnée en correspondance avec la position angulaire indexée du volant, de façon que ladite roulette constitue à la fois un moyen de rappel et un moyen d'indexage pour ledit volant.

Selon un mode de réalisation avantageux, l'embase est enfichée sur une protubérance polygonale ou analogue de la colonne de direction, de façon à assurer le couplage en rotation, le blocage en translation étant assuré par un jonc anti-arrachement monté sur ladite protubérance.

En variante, l'embase est d'une pièce avec la colonne de direction.

D'autres caractéristiques et avantages apparaîtront plus clairement à la lumière de la description qui va suivre et des dessins annexés, concernant des modes de réalisation particuliers, en référence aux figures où :
- la figure 1 est une coupe axiale d'un dispositif de sécurité anti-vol conforme à l'invention, dans lequel la pièce mobile d'accouplement est une clavette, et la pièce de liaison est d'une pièce avec l'organe amovible d'actionnement (en formant une clé allongée), la position illustrée correspondant à une position d'accouplement de la clavette (clé allongée insérée convenablement) ;
- la figure 2 est une coupe illustrant le dispositif précédent après extraction de la clé allongée, la clavette étant alors dans sa position de désaccouplement ;
- la figure 3 est une vue de dessus de la clavette du dispositif précédent ;
- la figure 4 est une coupe partielle illustrant une variante dans laquelle la clavette est suspendue à un ressort, la position illustrée étant celle du désaccouplement ;
- la figure 5 est une coupe axiale illustrant une autre variante de l'invention dans laquelle la clavette est articulée, ici sur l'embase, la position illustrée correspondant à une position d'accouplement de la clavette (clé insérée) ;
- la figure 6 est une coupe partielle illustrant le dispositif de la figure 5 en position de désaccouplement, la clé ayant été extraite, et la clavette étant basculée dans sa position de désaccouplement ;
- les figures 7 et 8 illustrent en coupe une autre variante dans laquelle la pièce de liaison est montée en bout d'un plongeur, l'organe amovible d'actionnement se présentant alors sous la forme d'une clé courte, et la clavette, de type articulé, étant complétée par une autre clavette articulée, les positions illustrées correspondant respectivement à un désaccouplement (plongeur rétracté) et un accouplement (plongeur avancé) ;
- la figure 9 illustre en coupe une variante du système précédent, dans laquelle le barillet de la clé est seulement tournant, l'avancement du plongeur étant alors assuré par des cames coopérantes ;
- les figures 10 à 12 sont des vues de détail concernant la douille fixe dans laquelle est disposé le barillet de la clé, respectivement avec un couplage tournant, un couplage hélicoïdal, et un fond servant de détrompeur ;
- la figure 13 est une coupe partielle illustrant un mécanisme de cloisonnement analogue à une guillotine, permettant d'obturer le passage de la pièce de liaison, ce qui améliore la sécurité du dispositif ;
- la figure 14 est une coupe partielle illustrant des mécanismes de rappel et/ou d'indexage associés au volant, facilitant une nouvelle insertion de l'organe amovible d'actionnement ;
- les figures 15 et 16 sont deux vues en élévation d'une clé allongée du type représente aux figures 1 et 2, avec ses moyens de codage, de commande à infra-rouge, et d'éclairage localisé.

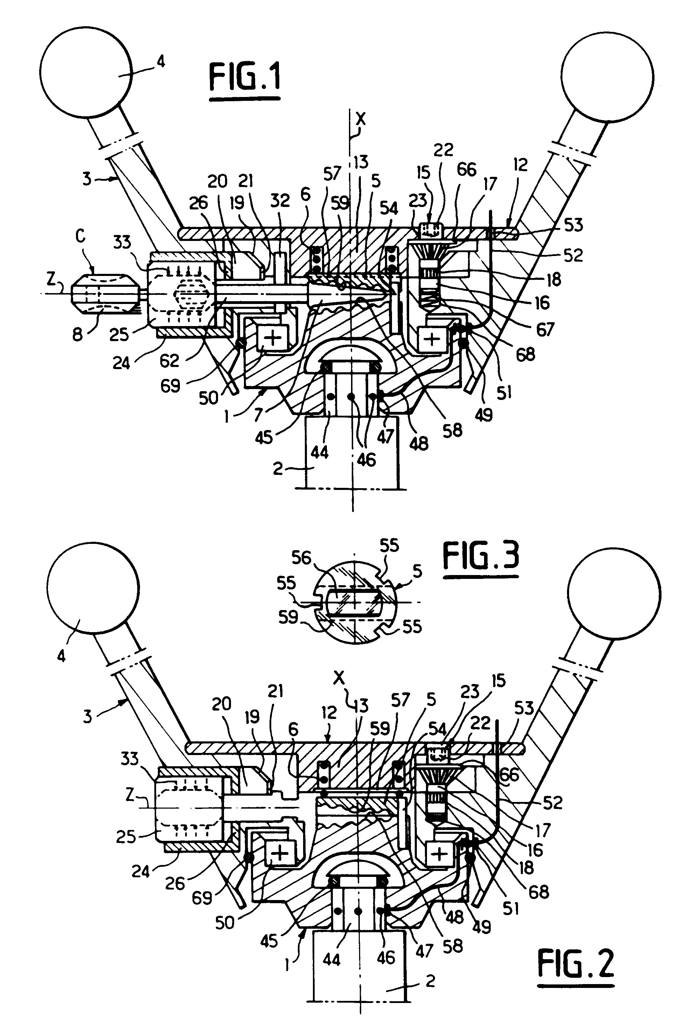

La figure 1 permet de distinguer un dispositif de sécurité anti-vol pour volant de direction de véhicules automobiles conforme à l'invention, ce dispositif comportant une embase 1 solidaire de la colonne de direction 2, un support de volant 3 solidaire du volant 4 et monté tournant sur l'embase 1. L'embase 1 est ici enfichée sur une protubérance polygonale ou analogue 44 de la colonne de direction 2, le contour polygonal ou autre permettant d'assurer le couplage en rotation, un jonc 45 d'anti-arrachement étant monté sur cette protubérance 44 pour assurer le blocage en translation sur la colonne de direction 2. Un tel mode de liaison est intéressant, car il permet d'enficher directement l'ensemble associé au volant du véhicule sur la colonne de direction de celui-ci, et de plus sans avoir à se soucier des contacts électriques associés à cet ensemble de volant. La protubérance polygonale 44 comporte en effet une pluralité de contacts 46 au niveau de ses facettes, contre lesquels viennent directement des capteurs 47 de chacun desquels part un fil 48 menant à des capteurs à glissement 49 disposés sur la périphérie extérieure de l'embase 1. Le support de volant 3 est monté tournant sur l'embase 1 par l'intermédiaire d'un roulement à billes 50, et la surface intérieure de la partie moyeu du support de volant 3 est équipée de contacts 51 desquels partent des fils 52 traversant le support de volant 3 pour sortir par un orifice 53 ménagé dans un couvercle central 12 solidaire dudit support de volant. Un tel mode de branchement permet ainsi un raccordement aisé concernant l'avertisseur, le régulateur de vitesse constante, les masses, ou tout autre système de contrôle.

Conformément à un aspect essentiel de l'invention, le dispositif de sécurité comporte au moins une pièce mobile 5 d'accouplement en rotation de l'embase 1 et du support de volant 3, ladite pièce mobile étant ici réalisée sous la forme d'une clavette mobile sensiblement selon l'axe X de la colonne de direction 2 entre une position d'accouplement et une position de désaccouplement. Dans le cas particulier des figures 1 et 2, la clavette 5 est montée flottante sur l'embase 1, sans pouvoir tourner par rapport à celle-ci. Ceci est obtenu au moyen de barrettes 54 qui sont reçues dans des rainures associées de l'embase parallèles à l'axe X de la colonne de direction. Ces barrettes 54 passent dans des échancrures 55 de la clavette 5, ainsi que cela est mieux visible sur la figure 3. La clavette 5 se présente ici sous la forme d'un disque surmonté d'une excroissance 56 formant clavette proprement dite, excroissance pouvant pénétrer dans une rainure 57 associée ménagée ici dans la face d'extrémité d'une extension 13 d'un couvercle central 12. La clavette 5 est ainsi mobile entre une position (ici haute) d'accouplement, dans laquelle l'excroissance 56 (à facettes latérales légèrement inclinées pour favoriser le centrage dans la rainure associée) pénètre dans la rainure associée 57, et une position (ici basse) de désaccouplement, dans laquelle l'excroissance 56 est dégagée de ladite rainure associée 57, comme cela est illustré sur la figure 2. Lorsque la clavette 5 est dans la position illustrée sur la figure 1, on obtient un couplage direct entre celle-ci et le couvercle central 12, lequel est solidaire du support de volant 3, et de ce fait une solidarisation entre le volant 4 et la colonne de direction 2 par l'intermédiaire successivement du support de volant 3, du couvercle central 12, de la clavette 5, des barrettes 54, et de l'embase 1. Dans ce mode de réalisation, le mouvement de la clavette 5 est ainsi exactement parallèle à l'axe X de la colonne de direction 2. Un moyen de rappel, ici prévu sous la forme d'un ressort hélicoïdal de compression 6 porté par le couvercle central 12, est prévu pour tendre à ramener la clavette 5 dans sa position de désaccouplement, comme cela est illustré sur la figure 2. L'embase 1 présente supérieurement (sur la figure) un contour externe codé 58, et la clavette 5 présente inférieurement (toujours sur la figure) un contour interne codé 59 : les contours 58 et 59 sont prévus pour être contactés par une pièce de liaison 7 qui est mobile en translation dans une direction Z sensiblement radiale (orthogonale ou oblique, mais coupant l'axe X de la colonne de direction 2) à l'intérieur du dispositif de sécurité, ladite pièce de liaison étant mobile entre une position avancée dans laquelle elle maintient la clavette 5 dans sa position d'accouplement (figure 1), et une position de dégagement dans laquelle elle permet à ladite pièce mobile d'accouplement d'être maintenue par le ressort de rappel associé 6 dans sa position de désaccouplement (figure 2). Il est prévu un organe amovible d'actionnement 8 insérable latéralement dans le support de volant 3, ledit organe permettant, lorsqu'il est inséré, d'amener la pièce de liaison amovible 7 dans sa position avancée en vue de la solidarisation du volant avec la colonne de direction, et, lorsqu'il est extrait, d'amener ladite pièce de liaison mobile dans sa position de dégagement en vue de la désolidarisation dudit volant d'avec ladite colonne de direction. Dans le cas particulier de la figure 1, la pièce de liaison 7 et l'organe amovible d'actionnement 8 constituent une pièce unique se présentant sous la forme d'une clé allongée C. Le support de volant 3 comporte alors une douille fixe 24 dans laquelle est disposé un barillet tournant 25 associé à la clé allongée C.

Un tel dispositif est d'utilisation extrêmement simple, puisqu'il suffit à l'opérateur d'insérer la clé C dans le barillet 25 pour amener la pièce de liaison 7 entre l'embase 1 et la clavette 5 afin de soulever ladite clavette pour réaliser l'accouplement par l'intermédiaire de la rainure 57 du couvercle central 12 : une fois la clé C correctement mise en place, on est alors assuré que le volant 4 est bien solidarisé à la colonne de direction 2. Lorsque l'utilisateur retire la clé C, toujours selon la direction Z, la clavette 5 reprend alors automatiquement, sous l'action du ressort de rappel 6, sa position de désaccouplement illustrée sur la figure 2 : le support de volant 3 peut alors librement tourner sur la colonne de direction 2, de sorte qu'on est parvenu à obtenir automatiquement une désolidarisation du volant 4 d'avec ladite colonne de direction.

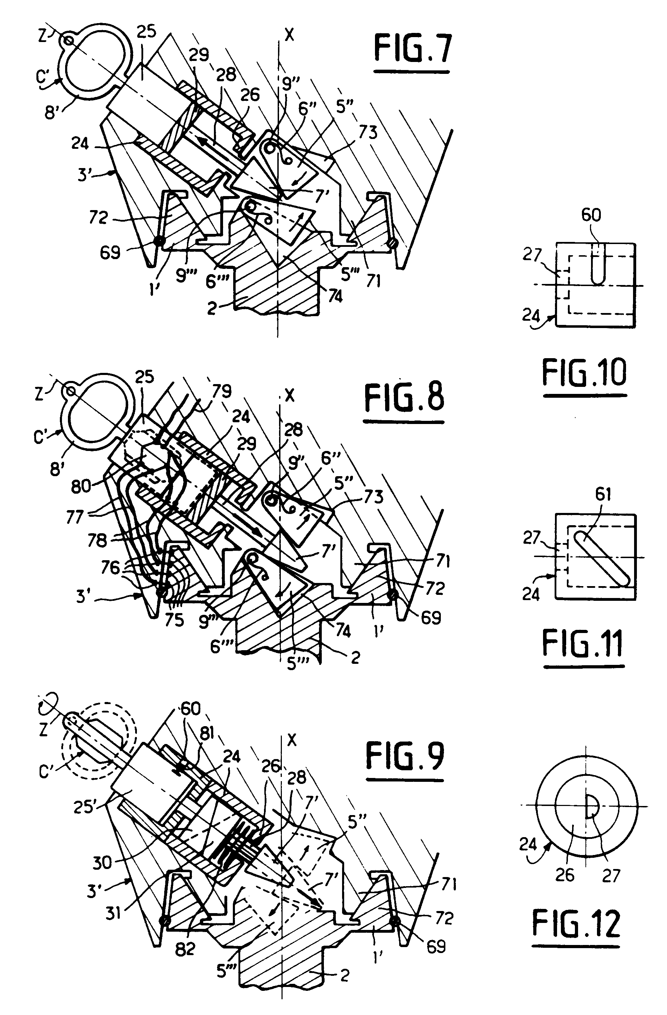

Les contours 58 de l'embase 1 et 59 de la clavette 5 présentent une géométrie qui correspond au codage mécanique de la pièce de liaison 7. La pièce de liaison 7 présentera de préférence des portées d'accouplement sensiblement coniques, afin d'annihiler les jeux de fonctionnement, et l'extrémité de ladite pièce pourra également participer à la compensation des jeux de fonctionnement en formant un coin permanent. Il va de soi que diverses mesures de sécurité seront naturellement prévues dans le cadre de l'invention : on a schématisé sur la figure 1 des moyens de décodage 33 associés au barillet 25 permettant la reconnaissance du codage de la clé C. Par ailleurs, comme cela est illustré sur la figure 12, la douille fixe 24 dans laquelle peut tourner le barillet 25, présente un fond 26 perce d'un orifice de passage 27 dont le contour, ici en demi-cercle, permet à ladite douille d'assurer une fonction de détrompeur. Après une rotation autorisée de la clé C sur une fraction de tour, par exemple un quart ou un demi-tour, l'extrémité de cette clé, qui constitue la pièce de liaison 7, doit être dans une position lui permettant de passer par l'orifice 27 de la douille fixe 24. Le barillet 25 peut être simplement tournant autour de l'axe Z dans la douille fixe 24, auquel cas on pourra prévoir un couplage entre ledit barillet et ladite douille : comme cela est illustré sur la figure 10, la douille fixe 24 pourra par exemple comporter une lumière semi-circulaire 60 dans laquelle se déplace un téton fixé sur la périphérie extérieure du barillet 25. Il est cependant également possible d'organiser un déplacement du barillet 25 dans la douille fixe 24 concurremment à la rotation dudit barillet : ceci pourra par exemple être obtenu avec une douille fixe 24 présentant, comme cela est illustré sur la figure 11, une lumière oblique 61 dans laquelle passe un téton porté par le barillet 25, de telle sorte qu'une rotation de la clé C insérée dans ledit barillet produise automatiquement l'avancement de ce barillet dans la douille, et par suite une amenée de la pièce de liaison 7 dans sa position avancée. Il va de soi naturellement que les couplages précités pourront être inversés, en prévoyant un téton sur la surface intérieure de la douille fixe 24 et une lumière sur la périphérie extérieure du barillet 25.

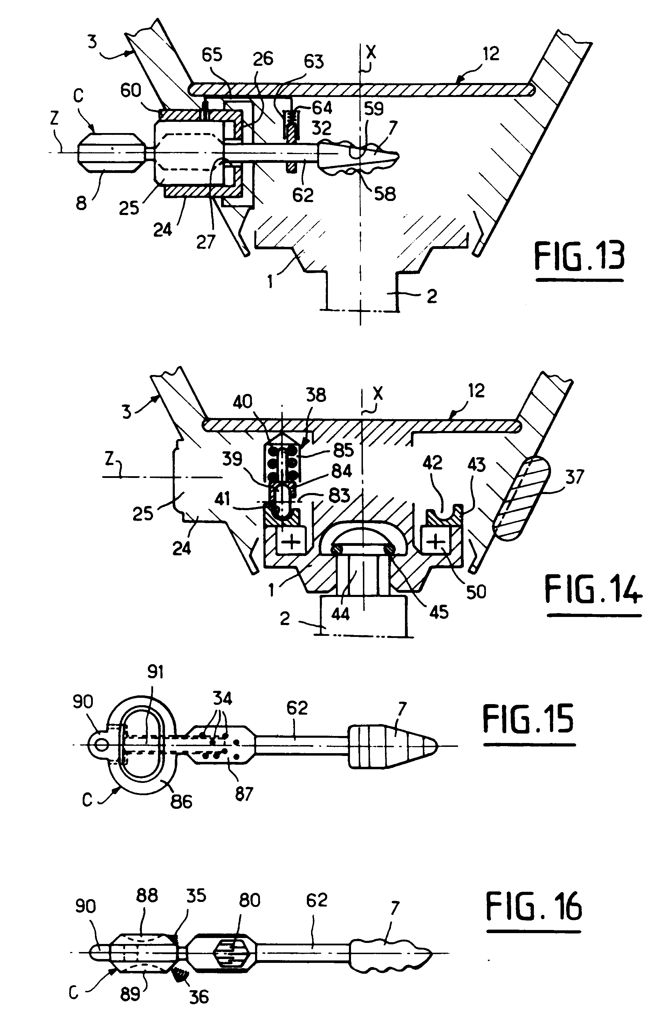

On distingue sur la figure 1, au niveau de la tige 62 de la clé C, une barrette 32 dont la direction est sensiblement parallèle à l'axe X de la colonne de direction 2 : il s'agit d'un mécanisme de sécurité que l'on a isolé sur la représentation de la figure 13, le support de volant 3 comportant en effet une barrette mobile de cloisonnement 32 capable d'obturer le passage de la pièce de liaison 7, cette barrette mobile, ou guillotine, étant seulement actionnée par une rotation normale du barillet 25 lorsque la clé C a été reconnue par l'intermédiaire des moyens de décodage associes 33. La barrette 32, coulissant dans un logement 63 est soumise à l'action d'un ressort 64 tendant à maintenir ladite barrette en position d'obturation du passage. La commande de ce mécanisme pourra se faire mécaniquement ou par un électro-aimant, ou par tout moyen équivalent. Ce mécanisme de cloisonnement est extrémement intéressant dans la mesure où il représente une sécurité importante pour la reconnaissance de la clé, et où il procure un cloisonnage total des zones externes (barillet et pièces visibles de l'extérieur) et internes (parties codées). Sur la figure 13, on a simplement schématisé le circuit de commande par une branche 65 reliant l'extrémité de la lumière 60 de la douille fixe 24 au logement 63 de ladite barrette.

Ainsi que cela a été dit plus haut, le couvercle central 12 est solidaire du support de volant 3. Cependant, il est intéressant de pouvoir régler la position angulaire de ce couvercle central 12 par rapport au support de volant, de sorte qu'il est ici prévu que le couvercle central 12 est accouplé au support de volant 3 par un moyen de verrouillage 15 qui est débrayable pour permettre de régler la position angulaire dudit couvercle central par rapport audit support de volant. En l'espèce, ce moyen de verrouillage 15 est constitué par un téton 16 mobile entre une position haute d'accouplement et une position basse de désaccouplement et de réglage. Le téton 16 comporte une tête polygonale 22 reçue dans un orifice associé 23 du couvercle central 12, puis une collerette d'appui 66 de laquelle part une denture conique 17 pouvant coopérer pour le réglage avec une denture homologue 19 prévue sur une couronne 20 portée par le support de volant 3, puis une denture inférieure cylindrique 18 coopérant pour le verrouillage avec une denture intérieure homologue 21 de ladite couronne. L'extrémité du téton 16 pénètre dans un orifice associé 67 du support de volant 3, et est chargée par un ressort 68 tendant à maintenir ledit téton en position haute dans laquelle la collerette 66 est en appui contre le couvercle central 12. Dans la position de la figure 1, la tête polygonale 22 assure l'anti-rotation du téton 16, et la denture cylindrique 18 transmet cette anti-rotation par l'intermédiaire de la denture intérieure 21 homologue au support de volant 3, par l'intermédiaire de la couronne 20 qui lui est solidaire. Lorsque l'on veut modifier la position angulaire du couvercle central 12 par rapport au support de volant 3, il suffit d'utiliser un outil, tel qu'une clé Allen, pour pousser le téton 16 par sa tête polygonale 22, ce qui désolidarise la liaison entre ladite tête et le couvercle central 12, et amène en même temps en prise la denture conique 17 dudit téton et la denture conique homologue 19 de la couronne 20. en faisant tourner l'outil, on parvient a!sement à régler la position angulaire du couvercle central 12 par rapport au support de volant 3 jusqu'à la position angulaire désirée, après quoi il suffit de dégager l'outil et de relâcher le téton 16 qui revient en position grâce a son ressort 68. On pourra également prévoir un deuxième téton de verrouillage, identique au premier, formant une double sécurité lorsque le réglage a été effectué. On notera enfin sur les figures 1 et 2 la présence d'un jonc 69 de sécurité axiale anti-arrachement entre le support de volant 3 et l'embase 1.

Dans le cadre des figures 1 à 3, la clavette 5 est montée flottante sur l'embase 1, mais il est entendu que l'on pourra prévoir un montage flottant analogue sur l'embase 1 pour cette clavette 5. Il est par ailleurs prévu, dans le cadre de l'invention, d'autres variantes pour le montage de la clavette d'accouplement en rotation de l'embase 1 et du support de volant 3.

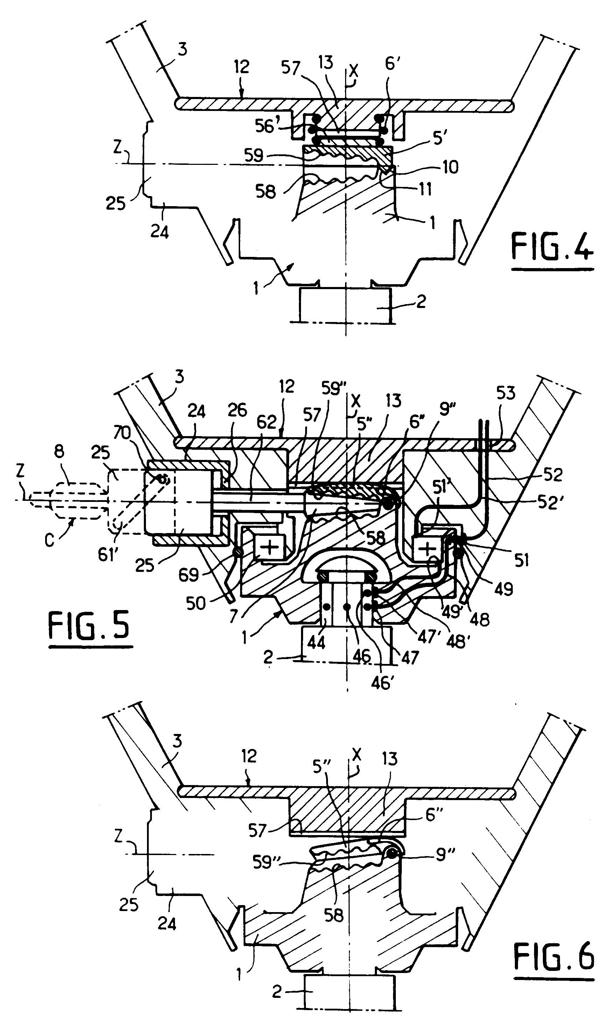

Sur la figure 4, la clavette 5' est suspendue à un ressort 6', lui-même suspendu à l'extension 13 du couvercle central 12. La dernière spire du ressort 6' passe autour de l'excroissance 56' de la clavette 5', ce qui assure le support correct de ladite clavette. Le ressort 6' assure ainsi en même temps le rappel de la clavette 5' en position de désaccouplement, position qui est illustrée sur la figure 4. Compte tenu du caractère élastique du support de la clavette 5', il est avantageux de prévoir un moyen supplémentaire pour assurer le calage de la clavette 5' lorsque celle-ci est en position de désaccouplement : ceci peut par exemple être assuré par un appui conique, avec un pointeau 10 ménagé sur la face opposée de la clavette 5', ce pointeau pénétrant dans un évidement homologue 11 ménagé sur l'embase 1. On est ainsi assuré que la clavette 5' est convenablement positionnée lorsque celle-ci est en position de désaccouplement, afin de ne pas gêner l'insertion de la pièce de liaison 7 pour amener ladite clavette dans sa position d'accouplement.

Les figures 5 et 6 illustrent une autre variante dans laquelle la clavette est articulée. On distingue sur ces figures une clavette 5'', ici articulée sur l'embase 1 autour d'un axe 9'' sensiblement orthogonal à la direction de translation Z de la pièce de liaison mobile 7. Le moyen de rappel associé à la clavette articulée 5'' est alors de préférence réalisé sous la forme d'un ressort spiral 6'' agencé au niveau de l'axe 9'' de ladite clavette. Sur la figure 5, la pièce de liaison 7 est en position avancée, de sorte que la clavette 5'' est en position relevée d'accouplement, position dans laquelle elle pénètre dans la rainure associée 57 de l'extension 13 du couvercle central 12. La transmission du couple imprimé au volant se fait alors par l'intermédiaire du support de volant 3, du couvercle central 12, de la clavette 5'', de l'axe 9'' de ladite clavette, et de l'embase 1. Il est à noter que la pièce 7 participe également à la transmission du couple, dans la mesure où le contour interne 59'' de la clavette 5'' est réalisé sous la forme d'un couloir de passage. La douille fixe 24 comporte ici un pion 70 et le barillet 25 est muni d'une lumière oblique 61' (ce qui constitue l'inversion du mécanisme illustré en figure 11), de sorte que la rotation de la clé C induit automatiquement une avancée du barillet 25 dans la douille fixe 24, et une amenée de la pièce de liaison 7 dans sa position avancée en vue de l'accouplement.

La vue de la figure 6 illustre la position de la clavette 5'', qui a basculé sous l'action de son ressort associé 6'' après extraction de la clé C : la clavette 5'' est ainsi dégagée de la rainure associée 57, de sorte que l'on obtient à nouveau un désaccouplement du volant d'avec la colonne de direction. La figure 5 illustre également un autre mode de transmission par capteur à partir de contacts prévus sur la protubérance polygonale de la colonne de direction jusqu'en face avant du couvercle central. La protubérance polygonale 44 de la colonne de direction 2 présente en effet d'autres contacts 46' contre lesquels viennent en appui des capteurs 47' ici reliés, par un fil 48' noyé dans l'embase 1, à la bague extérieure du roulement 50 pour une connexion 49' ; une connexion 51', prévue sur la bague intérieure du roulement 50, est reliée a un fil de sortie 52' passant par exemple par l'orifice 53 du couvercle central 12 déjà prévu pour le ou les fils 52 : dans cette variante, on utilise ainsi le roulement servant de palier pour le support de volant pour passer un courant dans un ou plusieurs fils extérieurs, le courant passant par la bague extérieure du roulement 50, les billes de celui-ci, et enfin la bague intérieure dudit roulement. Ceci permet de disposer d'un nombre de capteurs plus élevés pour compléter l'équipement électrique du véhicule.

On va maintenant décrire, en regard des figures 7 et 8, une autre variante dans laquelle la pièce de liaison n'est plus d'une pièce d'avec l'organe amovible d'actionnement, comme cela était le cas dans le dispositif précédemment décrit. La pièce de liaison 7' est ici montée en bout de la tige 28 d'un plongeur 29 coulissant comme un piston dans une douille fixe 24 disposée dans le support de volant 3, l'organe amovible d'actionnement 8' se présentant alors sous la forme d'une clé courte C' pouvant être insérée dans un barillet associé 25 qui peut tourner et/ou coulisser dans ladite douille fixe pour actionner ledit plongeur. Comme cela est visible sur les figures 7 et 8, la pièce mobile est ici une clavette 5'' articulée sur l'embase 1', mais il va de soi que cette désolidarisation entre la pièce de liaison et l'organe amovible d'actionnement pourrait aussi bien être appliquée avec une clavette de type flottant et non articulée, conformément aux variantes précédemment décrites. Le plongeur 29 peut être indépendant du barillet 25, auquel cas il conviendra de prévoir un ressort de rappel (non représenté ici) entre ledit plongeur et le fond 26 de la douille fixe 24. Il sera également possible de prévoir une liaison d'entraînement en translation et/ou en rotation entre le plongeur 29 et le barillet 25, et l'on pourra alors faire appel par exemple à une douille fixe du type de celle décrite sur la figure 11, avec une lumière oblique.

Il est intéressant de noter que l'embase 1' est ici d'une pièce avec la colonne de direction 2, et présente une couronne 72 dont la surface intérieure conique permet l'appui d'une couronne homologue 71 solidaire du support de volant 3'. On prévoira naturellement un jonc d'anti-arrachement 69 analogue à celui des variantes précédentes. La symétrie de révolution des pièces d'appui permet un montage aisé et rapide de l'ensemble associé au volant sur la colonne de direction du véhicule. Une clavette 5'' est articulée par son axe 9'' sur le support de volant 3', tandis que la partie centrale de la colonne de direction 2 est ici surmontée d'une extension portant l'axe 9''' d'une deuxième clavette articulée 5''', chacune de ces clavettes étant équipée d'un ressort spiral assurant son rappel respectivement 6'', 6''' : on distingue une encoche 73 sur le support de volant 3', associée à la clavette articulée 5'', et une encoche 74 sur la colonne de direction, associée à la deuxième clavette articulée 5''', les ressorts de rappel 6'' et 6''' tendant ainsi à rappeler les deux clavettes articulées 5'' et 5''' l'une vers l'autre, de telle façon que ces clavettes soient en position de désaccouplement (position de la figure 7). Lorsque la clé C' est insérée selon la direction Z dans le barillet 25, puis tournée et/ou poussée dans cette direction, le plongeur 29 avance dans la douille fixe 24, ce qui amène la pièce de liaison 7' dans sa position avancée correspondant à la position d'accouplement des clavettes 5'' et 5''' (position illustrée en figure 8).

La clavette articulée 5'' est donc ici complétée par la deuxième clavette 5''' articulée sur l'ensemble que forme l'embase 1' et la colonne de direction 2, ces clavettes étant agencées de telle façon que la pièce de liaison 7' passe entre celles-ci pour les écarter l'une de l'autre en vue de l'accouplement, mais il va de soi que l'on pourra prévoir tout autre agencement comportant deux clavettes articulées sur le support de volant, ou encore deux clavettes articulées sur la colonne de direction.

La figure 8 permet également de distinguer la disposition particulière des contacts de contrôle, cette disposition étant légèrement différente de celle des figures précédentes en raison de la structure unitaire de l'ensemble constitué par la colonne de direction 2 et l'embase 1', ensemble sur lequel est directement amené le support de volant 3'. On distingue ainsi une pluralité de contacts 75 ménagés sur la périphérie de l'embase 1', contre lesquels frottent des capteurs glissants 76 reliés à des fils de jonction 77 et 78. Sur la figure 8, on distingue ainsi des fils 77 et 78 reliés à des contacts de contrôle prévus sur le barillet 25, contacts qui coopèrent avec un micro-module 80 qui peut par exemple être une puce simplement collée sur la clé C'. On distingue également des fils 79 servant de témoins pour le passage normal du barillet 25 dans la douille fixe 24, ce qui permet d'utiliser une sécurité de contrôle supplémentaire.

La figure 9 illustre une variante du dispositif des figures 7 et 8, variante dans laquelle le barillet tournant 25' n'est pas prévu pour avancer dans la douille fixe associée 24 : la douille fixe 24 présente une partie arrière analogue à celle décrite à la figure 10, c'est-à-dire avec une lumière 60 en quart de cercle ou en demi-cercle, lumière dans laquelle pénètre un téton 81 solidaire du barillet 25'. La douille fixe 24 se prolonge vers l'avant par une extension recevant le plongeur ainsi qu'une extrémité solidaire du barillet tournant 25'. Le barillet 25' est en effet prolongé par une extrémité en forme de came 30, et le plongeur 29 présente une tête en forme de came 31 homologue de l'autre came 30. Le plongeur 29 doit naturellement être monté non-tournant dans la douille fixe 24, ce qui peut être obtenu par un contour adéquat de la tige 28 du plongeur 29 d'une part et de l'orifice de passage 27 d'autre part (on pourra naturellement prévoir une denture d'anti-rotation). Un ressort 82 est de préférence prévu pour le rappel du plongeur 29, de façon à assurer un contact permanent entre les deux extrémités en forme de came 30 et 31. Ainsi, une rotation de la clé C' insérée dans le barillet 25' produit une rotation du barillet 25', et de ce fait de son extrémité en forme de came 30, ce qui produit un avancement du plongeur 29 dans la douille fixe 24, et par suite une amenée de la pièce de liaison 7' dans sa position avancée. Les clavettes articulées des figures 7 et 8 n'ont pas été représentées sur la figure 9, dans la position rétractée du plongeur (indiquée en trait continu), mais seulement dans la position avancée dudit plongeur (position indiquée en pointillés). Tout comme la variante précédente, il va de soi que cette dernière variante pourra être utilisée en combinaison avec des clavettes agencées différemment, et notamment des clavettes montées flottantes sur le support de volant 3' ou sur l'extension centrale de la colonne de direction 2.

Le dispositif de sécurité de l'invention comporte avantageusement un mécanisme de cloisonnement analogue à une guillotine, comme cela est illustré en figure 13, ainsi que décrit plus haut, mais aussi des mécanismes de rappel et d'indexage associés au volant, afin de faciliter une nouvelle insertion de l'organe mobile d'actionnement. De tels mécanismes sont illustrés sur la figure 14.

Il est en effet avantageux de prévoir un moyen de rappel tendant à ramener naturellement le volant 4 dans la position angulaire qui correspond à l'insertion de l'organe mobile d'actionnement 8 ou 8', afin de faciliter toute nouvelle insertion dudit organe. Un tel moyen de rappel tend ainsi à ramener le volant 4 dans cette position angulaire lorsque ledit volant a été désolidarisé d'avec la colonne de direction, après extraction de l'organe amovible d'actionnement 8 ou 8'. De nombreux dispositifs pourront être utilisés pour remplir cette fonction, et on a illustré sur la figure 14 deux modes de réalisation possibles. Le moyen de rappel peut en effet être constitué par un balourd 37 fixé latéralement sur le support de volant 3 : compte tenu des faibles forces de frottement concernées ici, un balourd de quelques grammes sera en général suffisant. Il sera alors préférable de prévoir un moyen d'indexage particulier permettant de marquer la position du volant 4 lorsque celui-ci est dans la position angulaire qui correspond à l'insertion de l'organe mobile amovible d'actionnement 8 ou 8', ce moyen d'indexage pouvant être un billage (bille + ressort), billage prévu entre l'embase et le support de volant 3, ou encore un ressort spécial en forme de coeur. La figure 14 permet également de distinguer un autre mode de réalisation du moyen de rappel précité, ce moyen 38 étant constitué par une roulette 39, dont l'axe 83 est sensiblement orthogonal de l'axe X de la colonne de direction. La roulette 39 est montée par un support 84 capable de se déplacer dans un perçage borgne associé 85 du support de volant 3, ce support étant soumis a l'action d'un ressort 40 tendant à appliquer la roulette 39 contre le fond incliné 41 d'une gorge 42 prévue sur une couronne 43 solidaire de l'embase 1. Ainsi que cela est aisé à comprendre, si le support de volant a subi une rotation quelconque après l'extraction de l'organe amovible d'actionnement 8 ou 8', la force appliquée par le ressort 40 sur la roulette 39 tend à ramener le support de volant dans la position angulaire désirée. Il sera alors avantageux de prévoir que le fond de la gorge 41 présente une cuvette (non représentée ici) dans laquelle peut pénétrer la roulette 39, ladite cuvette étant positionnée en correspondance avec la position angulaire indexée du volant 4, de façon que ladite roulette constitue alors à la fois un moyen de rappel et un moyen d'indexage pour ledit volant. On pourra en variante prévoir une roulette d'axe parallèle à l'axe X de la colonne de direction, cette roulette étant alors en appui contre une gorge excentrique, dont le fond pourra également comporter une cuvette pour l'indexage de la position angulaire désirée du volant. Il sera également intéressant de prévoir un système de bruiteur intervenant comme alerte lorsque le volant est tourné désaccouplé.

Les figures 15 et 16 illustrent un mode de réalisation particulier d'une clé allongée C du type représenté aux figures 1 et 2. La clé C comporte ainsi une tête 86 reliée à une portion élargie 87 destinée à pénétrer dans un barillet 25 précédemment décrit, puis se prolonge par une tige 62 jusqu'à la pièce de liaison 7 formant came de commande pour la clavette d'accouplement. La portion 87 comporte des pions de codage 34 de type bien connu dans le domaine des serrures, ainsi qu'un micro-module 80 sous la forme d'une puce collée. Le micro-module 80 constitue un terminal intelligent qui peut être en relation directe avec l'ordinateur de bord du véhicule, ce qui permet également d'emporter avec soi les mémoires codées attachées à la clé extractible. Outre les moyens de codage 34, la clé C comporte également des moyens autonomes de commande à infra-rouge et d'éclairage localisé : on distingue ainsi sur la figure 16 une sortie de commande à infra-rouge 36 (ou par radio) actionnée par un poussoir associé 89, et une sortie de commande d'éclairage localisé 35 actionnée par un poussoir associé 88, ces deux poussoirs étant montés sur la tête 86 de la clé C, et ces moyens autonomes étant alimentés par une pile intégrée non représentée ici. La tête 86 de la clé se prolonge en partie arrière par un anneau 90, anneau qui peut être relié à une clé de secours 91 en partie arrière de ladite clé, pour le cas où la commande infra-rouge serait par exemple en panne.

Les dispositifs de sécurité anti-vol qui viennent d'être décrits peuvent naturellement être modifies en remplaçant un ou plusieurs de leurs organes par des organes équivalents. La pièce mobile d'accouplement en rotation pourra ainsi être par exemple portée par un tiroir oscillant dans la direction d'insertion de l'organe amovible d'actionnement. Pour ce qui est du moyen de rappel qui tend à ramener la pièce mobile d'accouplement dans sa position de désaccouplement, on pourra naturellement utiliser d'autres moyens qu'un ressort, par exemple des moyens magnétiques ou des moyens élastiques du type tampon de caoutchouc, ou encore utiliser la simple gravité de la pièce mobile d'accouplement lorsque le volant est horizontal.

On pourra également utiliser plusieurs pièces mobiles d'accouplement en rotation de l'embase et du support de volant, par exemple sous forme de deux clavettes flottantes ou articulées s'écartant l'une de l'autre lorsque la pièce de liaison mobile en translation est insérée entre celle-ci. En particulier, si l'on utilise un système à deux clavettes, on pourra remplacer l'ensemble de deux clavettes articulées précédemment décrit par deux clavettes dont l'une est mobile en translation et l'autre est articulée : dans ce cas, il y aura par exemple d'abord une translation de la clavette coulissante, puis un basculement de la clavette articulée.

Selon une autre variante rentrant également dans le cadre de l'invention, on pourra encore prévoir une ou deux clavettes portées par la pièce de liaison ou par la clé.

Par ailleurs, le couvercle central du support de volant pourra comporter un poussoir servant au démarrage du véhicule, la clé que constitue l'organe amovible d'actionnement étant alors utilisée de la même façon qu'une clé de contact traditionnelle. On pourra également prévoir une liaison électrique au contact général d'alimentation, de façon que le contact soit coupé lorsque la clé est extraite, ainsi qu'un capteur de détection de la présence de la clé, relié par exemple à un voyant lumineux pour indiquer que le système est en position d'accouplement ou de désaccouplement. Différents autres poussoirs de commande, et/ou afficheurs d'informations reliés à un microprocesseur de l'ordinateur de bord du véhicule pourront également être utilisés, dans la mesure où, comme on l'a vu plus haut, il est aisé de faire passer un nombre important de fils électriques à l'intérieur du support de volant.

L'invention n'est pas limitée aux modes de réalisation qui viennent d'être décrits.

## Revendications

1. Dispositif de sécurité anti-vol pour volent de direction de véhicule automobile, du type apte à assurer la solidarisation ou la désolidarisation du volant d'avec la colonne de direction du véhicule, comportant :
. une embase (1) solidaire de la colonne de direction (2);
. un support de volent (3) solidaire du volant (4) et monté tournant sur l'embase (1) ;
. au moins une pièce mobile (5 ; 5' ; 5'') d'accouplement en rotation de l'embase (1) et du support de volant (3), ladite pièce étant mobile sensiblement selon l'axe (X) de la colonne de direction (2) entre une position d'accouplement et une position de désaccouplement ;
. un moyen de rappel (6 ; 6' ; 6'') tendant à ramener la pièce mobile d'accouplement (5 ; 5' ; 5'') dans se position de désaccouplement ;
. une pièce de liaison (7 ; 7') mobile par l'intermédiaire d'un organe d'actionnement associé (8 ; 8') à l'intérieur du dispositif de sécurité, ladite pièce de liaison servent à maintenir la pièce mobile d'accouplement (5 ; 5' ; 5'') dans sa position d'accouplement, à l'encontre du moyen de rappel associé (6 ; 6' ; 6'') ;
ledit dispositif étant caractérisé en ce que :
. la pièce de liaison (7 ; 7') est mobile en translation dans une direction sensiblement radiale, entre une position avancée dans laquelle elle maintient la pièce mobile d'accouplement (5 ; 5' ; 5'') dans sa position d'accouplement, et une position reculée dans laquelle elle permet à ladite pièce mobile d'accouplement d'être maintenue par le moyen de rappel associé (6 ; 6' ; 6'') dans sa position de désaccouplement ;
. l'organe amovible d'actionnement (8 ; 8') est insérable latéralement dans le support de volant (3), ledit organe permettant, lorsqu'il est inséré, d'amener la pièce de liaison mobile (7 ; 7') dans sa position avancée en vue de la solidarisation du volant avec la colonne de direction, et, lorsqu'il est extrait, d'amener ladite pièce de liaison mobile dans sa position reculée en vue de la désolidarisation dudit volant d'avec ladite colonne de direction.

2. Dispositif selon la revendication 1, caractérisé par le fait que la pièce mobile d'accouplement (5 ; 5' ; 5'') est une clavette.

3. Dispositif selon la revendication 2, caractérisé par le fait que la clavette (5) est montée flottante sur l'embase (1) sans pouvoir tourner par rapport à celle-ci.

4. Dispositif selon la revendication 2, caractérisé par le fait que la clavette (5'') est articulée sur l'embase, autour d'un axe (9'') sensiblement orthogonal à la direction de translation (Z) de la pièce de liaison mobile (7 ; 7').

5. Dispositif selon la revendication 4, caractérisé par le fait que le moyen de rappel associé à la clavette articulée (5'') est un ressort spiral (6'') agencé au niveau de l'axe (9'') de ladite clavette.

6. Dispositif selon la revendication 2, caractérisé par le fait que la clavette (5') est suspendue à un ressort (6') qui assure en même temps le rappel de celle-ci en position de désaccouplement.

7. Dispositif selon la revendication 6, caractérisé par le fait qu'un moyen de centrage, tel qu'un appui conique (10, 11), est prévu pour assurer un calage de la clavette (5') lorsque celle-ci est en position de désaccouplement.

8. Dispositif selon l'une des revendications 1 à 7, caractérisé par le fait que le support de volant (3) porte un couvercle central (12) qui lui est solidaire, ledit couvercle se prolongeant vers l'intérieur du dispositif de sécurité par une extension (13) adaptée pour coopérer avec la pièce mobile d'accouplement (5 ; 5' ; 5'') lorsque celle-ci est en position d'accouplement.

9. Dispositif selon la revendication 8, caractérisé par le fait que l'extension (13) du couvercle central (12) supporte un ressort de rappel (6 ; 6') tendant à ramener la pièce mobile d'accouplement (5 ; 5') dans sa position de désaccouplement.

10. Dispositif selon la revendication 8, caractérisé par le fait que le couvercle central (12) est accouplé au support de volant (3) par un moyen de verrouillage (15) qui est débrayable pour permettre de régler la position angulaire dudit couvercle central par rapport audit support de volant.

11. Dispositif selon la revendication 10, caractérisé par le fait que le moyen de verrouillage (15) comporte au moins un téton (16) mobile entre une position haute d'accouplement et une position basse de désaccouplement et de réglage, ledit téton comportant une denture supérieure conique (17) pouvant coopérer pour le réglage avec une denture homologue (19) prévue sur une couronne (20) portée par le support de volant (3), et une denture inférieure cylindrique (18) coopérant pour le verrouillage avec une denture intérieure homologue (21) de ladite couronne, ledit téton présentant en outre une tête polygonale (22) accessible de l'extérieur et assurant son anti-rotation en position haute dans un orifice de passage associé (23) prévu au travers du couvercle central (12).

12. Dispositif selon l'une des revendications 1 a 11, caractérisé par le fait que la pièce de liaison (7) et l'organe amovible d'actionnement (8) constituent une pièce unique se présentant sous la forme d'une clé allongée (C), le support de volant (3) comportant alors une douille fixe (24) dans laquelle est disposé un barillet tournant (25) associé à ladite clé.

13. Dispositif selon la revendication 12, caractérisé par le fait que la douille fixe (24) présente un fond (26) percé d'un orifice de passage (27) dont le contour permet à ladite douille d'assurer une fonction de détrompeur.

14. Dispositif selon l'une des revendications 1 à 11, caractérisé par le fait que la pièce de liaison (7') est montée en bout de la tige (28) d'un plongeur (29) coulissant comme un piston dans une douille fixe (24) disposée dans le support de volant (3), l'organe amovible d'actionnement (8') se présentant alors sous forme d'une clé courte (C') pouvant être insérée dans un barillet associé (25) qui peut tourner et/ou coulisser dans ladite douille fixe pour actionner ledit plongeur.

15. Dispositif selon la revendication 14, caractérisé par le fait que la pièce mobile est une clavette (5'') articulée sur l'embase (1') ou le support de volant (3') et est complétée par une deuxième clavette (5''') également articulée, lesdites clavettes étant agencées de telle façon que la pièce de liaison (7') passe entre celles-ci pour les écarter l'une de l'autre en vue de l'accouplement.

16. Dispositif selon l'une des revendications 12 à 15, caractérisé par le fait que le barillet tournant (25) est couplé à la douille fixe (24) de telle façon qu'une rotation de la clé (C ; C') insérée dans le barillet produise un avancement dudit barillet dans ladite douille, et par suite une amenée de la pièce de liaison (7 ; 7') dans sa position avancée.

17. Dispositif selon la revendication 14 ou 15, caractérisé par le fait que le barillet tournant (25') est prolongé par une extrémité en forme de came (30), et le plongeur (29) est monté non-tournant dans la douille fixe (24) et présente une tête en forme de came (31) homologue de l'autre came (30), de telle façon qu'une rotation de la clé (C') insérée dans le barillet (25') produise un avancement dudit plongeur dans ladite douille, et par suite une amenée de la pièce de liaison (7') dans sa position avancée.

18. Dispositif selon l'une des revendications 12 à 17, caractérisé par le fait que le support de volant (3) comporte un moyen mobile de cloisonnement (32), capable d'obturer le passage de la pièce de liaison (7), ledit moyen étant seulement actionné par une rotation normale du barillet lorsque la clé (C) a été reconnue par l'intermédiaire de moyens de décodage associés (33).

19. Dispositif selon l'une des revendications 12 à 18, caractérisé par le fait que la clé (C ; C') comporte des moyens de codage (34).

20. Dispositif selon l'une des revendications 12 à 19, caractérisé par le fait que la clé (C ; C') comporte des moyens autonomes de commande à infra-rouge (36) et d'éclairage localisé (35), ainsi qu'un micro-module (80).

21. Dispositif selon l'une des revendications 1 à 20, caractérisé par le fait qu'il comporte un moyen d'indexage permettant de marquer la position du volant (4) lorsque celui-ci est dans la position angulaire qui correspond à l'insertion de l'organe amovible d'actionnement (8 ; 8'), afin de faciliter toute nouvelle insertion dudit organe.

22. Dispositif selon l'une des revendications 1 à 21, caractérisé par le fait qu'il comporte un moyen de rappel (37 ; 38) tendant à ramener naturellement le volant (4) dans ladite position angulaire lorsque ledit volant a été désolidarisé d'avec la colonne de direction, après extraction de l'organe amovible d'actionnement (8 ; 8').

23. Dispositif selon la revendication 22, caractérisé par le fait que le moyen de rappel est un balourd (37) fixé latéralement sur le support de volant (3).

24. Dispositif selon la revendication 22, caractérisé par le fait que le moyen de rappel (38) est constitué par une roulette (39) chargée par un ressort (40) et maintenue en appui contre le fond incliné (41) d'une gorge (42) prévue sur une couronne (43) solidaire de l'embase (1).

25. Dispositif selon les revendications 21 et 24, caractérisé par le fait que le fond de la gorge (41) présente une cuvette dans laquelle peut pénétrer la roulette (39), ladite cuvette étant positionnée en correspondance avec la position angulaire indexée du volant (4), de façon que ladite roulette constitue à la fois un moyen de rappel et un moyen d'indexage pour ledit volant.

26. Dispositif selon l'une des revendications 1 à 25, caractérisé par le fait que l'embase (1) est enfichée sur une protubérance polygonale ou analogue (44) de la colonne de direction (2), de façon a assurer le couplage en rotation, le blocage en translation étant assuré par un jonc anti-arrachement (45) monté sur ladite protubérance.

27. Dispositif selon l'une des revendications 1 à 25, caractérisé par le fait que l'embase (1') est d'une pièce avec la colonne de direction (2).

## Claims

1. An antitheft security device for the steering wheel of a motor vehicle, the device being of the type suitable for uniting or disuniting the steering wheel relative to the steering column of the vehicle, and comprising:
a base (1) united with the steering column (2);
a steering wheel support (3) united with the steering wheel (4) and rotatably mounted on the base (1);
at least one moving coupling piece (5; 5'; 5'') for providing rotary coupling between the base (1) and the steering wheel support (3), said piece being movable substantially along the axis (X) of the steering column (2) between a coupling position and an uncoupling position;
return means (6; 6'; 6'') urging the moving coupling piece (5; 5'; 5'') into its uncoupling position;
a link piece (7 ; 7') movable via an associated actuator member (8 ; 8') inside the security device, said link piece enabling to hold the moving coupling piece (5 ; 5' ; 5'') in its coupling position in opposition to the associated return means (6 ; 6' ; 6''),
the said device being characterized in that :
the link piece (7; 7') is movable in translation in a direction that is substantially radial, between an advanced position in which it holds the moving coupling piece (5; 5'; 5'') in its coupling position, and a set-back position in which it enables said moving coupling piece to be held by the associated return means (6; 6'; 6'') in its uncoupling position;
the removable actuator member (8; 8') insertable laterally into the steering wheel support (3), said member enabling, when inserted, to bring the moving link piece (7; 7') into its advanced position for the purpose of uniting the steering wheel with the steering column, and when it is withdrawn, to bring said moving link piece into its set-back position in order to disunite said steering wheel from said steering column.

2. A device according to claim 1, characterized by the fact that the moving coupling piece (5; 5'; 5'') is a keying member.

3. A device according to claim 2, characterized by the fact that the keying member (5) is floatingly mounted on the base (1) without being capable of rotating relative thereto.

4. A device according to claim 1, characterized by the fact that the keying member (5'') is hinged to the base about a hinge pin (9'') which is substantially orthogonal to the direction (Z) in which the moving link piece (7; 7') moves in translation.

5. A device according to claim 4, characterized by the fact that the return means associated with the hinged keying member (5'') is a spiral spring (6'') disposed about the hinge pin (9'') of said keying member.

6. A device according to claim 2, characterized by the fact that the keying member (5') is suspended from a spring (6') which simultaneously serves to return it towards its uncoupling position.

7. A device according to claim 6, characterized by the fact that centering means, such as a conical bearing surface (10, 11), are provided for securing the keying member (5') when it is in its uncoupling position.

8. A device according to any one of claims 1 to 7, characterized by the fact that the steering wheel support (3) carries a central cover (12) which is secured thereto, said cover extending towards the inside of the security device by means of an extension (13) which is adapted to co-operate with the moving coupling piece (5; 5'; 5'') when the coupling piece is in its coupling position.

9. A device according to claim 8, characterized by the fact that the extension (13) of the central cover (12) carries a return spring (6; 6') tending to return the moving coupling piece (5; 5') to its uncoupling position.

10. A device according to claim 8, characterized by the fact that the central cover (12) is coupled to the steering wheel support (3) by locking means (15) that are declutchable to enable the angular position of said central cover relative to said steering wheel support to be adjusted.

11. A device according to claim 10, characterized by the fact that the locking means (15) comprise at least one stud (16) that is movable between a high, coupling position and a low, uncoupling and adjustment position, said stud including a conical upper set of teeth (17) suitable for cooperating for adjustment purposes with a complementary set of teeth (19) provided on a ring (20) carried by the steering wheel support (3), and a cylindrical lower set of teeth (18) co-operating for locking purposes with a complementary internal set of teeth (21) of said ring, said stud also having a polygonal head (22) accessible from the outside and ensuring that when in the high position it does not rotate in an associated through orifice (23) provided through the central cover (12).

12. A device according to any one of claims 1 to 11, characterized by the fact that the link piece (7) and the removable actuator member (8) constitute a single member in the form of a long key (C), the steering wheel support (3) then including a fixed socket (24) which receives a rotary cylinder (25) associated with said key.

13. A device according to claim 12, characterized by the fact that the fixed socket (24) has an end (26) pierced by a through orifice (27) whose outline enables said socket to perform the function of ensuring that the parts are presented with an appropriate mutual disposition.

14. A device according to any one of claims 1 to 11, characterized by the fact that the link piece (7') is mounted at the end of the rod (28) of a plunger (29) that slides like a piston in a fixed socket (24) disposed in the steering wheel support (3), the removable actuator member (8') then being in the form of a short key (C') capable of being inserted in an associated cylinder (25) capable of rotating and/or sliding in said fixed socket in order to actuate said plunger.

15. A device according to claim 14, characterized by the fact that the moving piece is a keying member (5'') hinged to the base (1') or to the steering wheel support (3') and is associated with a second keying member (5''') likewise hinged, said keying members being organized in such a manner that the link piece (7') passes between them in order to move them apart from each other for coupling purposes.

16. A device according to any one of claims 12 to 15, characterized by the fact that the rotary cylinder (25) is coupled to the fixed socket (24) in such a manner that rotation of the key (C; C') inserted in the cylinder causes said cylinder to advance in said socket, and consequently brings the link piece (7; 7') into its advanced position.

17. A device according to claim 14 or 15, characterized by the fact that the rotary cylinder (25') is extended by a cam-shaped end (30), and the plunger (29) is mounted in non-rotary manner in the fixed socket (24) and has a head in the form of a cam (31) complementary to the other cam (30), such that rotation of the key (C') inserted in the cylinder (25') causes said plunger to be advanced in said socket, and consequently brings the link piece (7') into its advanced position.

18. A device according to any one of claims 12 to 17, characterized by the fact that the steering wheel support (3) includes moving partitioning means (32) capable of closing the passage for the link piece (7), said partitioning means being actuated solely by normal rotation of the cylinder once the key (C) has been recognized by associated decoding means (33).

19. A device according to any one of claims 12 to 18, characterized by the fact that the key (C; C') includes encoding means (34).

20. A device according to any one of claims 12 to 19, characterized by the fact that the key (C; C') includes battery powered infrared control means (36) and keyhole-lighting means (35), together with a micromodule (80).

21. A device according to any one of claims 1 to 20, characterized by the fact that it includes indexing means enabling the position of the steering wheel (4) to be marked when the steering wheel is in an angular position which corresponds to insertion of the removable actuator member (8; 8'), thereby facilitating reinsertion of said member.

22. A device according to any one of claims 1 to 21, characterized by the fact that it includes return means (37; 38) tending to urge the steering wheel (4) naturally towards said angular position while said steering wheel is released relative to the steering column, after the removable actuator member (8; 8') has been withdrawn.

23. A device according to claim 22, characterized by the fact that the return means is an out-of-balance weight (37) disposed to one side of the steering wheel support (3).

24. A device according to claim 22, characterized by the fact that the return means (38) is constituted by a wheel (39) biased by a spring (40) and urged against a sloping bottom (41) of a groove (42) provided on a ring (43) secured to the base (1).

25. A device according to claims 21 and 24, characterized by the fact that the bottom of the groove (41) has a depression in which the wheel (39) can penetrate, said depression being positioned to correspond with the indexed angular position of the steering wheel (4) such that said wheel simultaneously constitutes both return means and indexing means for said steering wheel.

26. A device according to any one of claims 1 to 25, characterized by the fact that the base (1) is plugged onto a polygonal projection (44) or the like of the steering column (2) so as to provide rotary coupling, locking in translation being provided by an anti-pull-off spring clip (45) mounted on said projection.

27. A device according to any one of claims 1 to 25, characterized by the fact that the base (1') is integral with the steering column (2).

## Patentansprüche

1. Diebstahlsicherungsvorrichtung für das Lenkrad eines Kraftfahrzeuges, die den Zusammenschluß des Lenkrads mit oder dessen Lösen von der Lenksäule des Fahrzeugs sicherstellt, umfassend:
einen mit der Lenksäule (2) fest verbundenen Sockel (1);
einen Lenkradträger (3), der mit dem Lenkrad (4) fest verbunden und an dem Sockel (1) drehbar gelagert ist;
zumindest ein bewegliches Teil (5;5';5'') zur drehfesten Kupplung des Sockels (1) und des Lenkradträgers (3), wobei dieses Teil im wesentlichen entlang der Achse (X) der Lenksäule (2) zwischen einer Kupplungslage und einer Entkupplungslage bewegbar ist;
ein Rückstellmittel (6;6';6''), das versucht, das bewegliche Kupplungsteil (5;5';5'') in seine Entkupplungslage zurückzuführen;
ein Verbindungsteil (7;7'), das mittels eines zugehörigen Betätigungselements (8;8') im Inneren der Sicherungsvorrichtung bewegbar ist, wobei dieses Verbindungsteil dazu dient, das bewegliche Kupplungsteil (5;5';5'') gegen die Wirkung des zugeordneten Rückstellmittels (6;6';6'') in seiner Kupplungslage zu halten;
dadurch gekennzeichnet:
daß das Verbindungsteil (7;7') in einer im wesentlichen radialen Richtung translatorisch bewegt werden kann zwischen einer vorgeschobenen Position, in der es das bewegliche Kupplungsteil (5;5';5'') in seiner Kupplungslage hält, und einer zurückgeschobenen Position, in der es ermöglicht, daß das bewegliche Kupplungsteil durch das zugehörige Rückstellmittel (6;6';6'') in seiner Entkupplungslage gehalten wird;
daß das unbewegliche Betätigungselement (8;8') seitlich in den Lenkradträger (3) eingesetzt werden kann, wobei dieses Element, wenn es eingesetzt ist, ermöglicht, daß das bewegliche Verbindungsteil (7;7') zum Zweck des Zusammenschlusses des Lenkrads mit der Lenksäule in seine vorgeschobene Lage geführt wird, und wobei dieses Element, wenn es herausgezogen ist, ermöglicht, daß das bewegliche Verbindungsteil zum Zweck des Lösens des Lenkrads von der Lenksäule in seine zurückgeschobene Lage geführt wird.

2. Vorrichtung nach Anspruch 1, dadurch gekennzeichnet, daß das bewegliche Kupplungsteil (5;5',5'') ein Keil ist.

3. Vorrichtung nach Anspruch 2, dadurch gekennzeichnet, daß der Keil (5) an dem Sockel (1) schwimmend und relativ dazu drehfest gelagert ist.

4. Vorrichtung nach Anspruch 2, dadurch gekennnzeichnet, daß der Keil (5'') an dem Sockel um eine zur Translationsrichtung (Z) des beweglichen Verbindungsteils (7;7') im wesentlichen orthogonale Achse (9'') schwenkbar gelagert ist.

5. Vorrichtung nach Anspruch 4, dadurch gekennzeichnet, daß das dem schwenkbar gelagerten Keil (5'') zugeordnete Rückstellmittel eine Spiralfeder (6'') ist, die auf Höhe der Achse (9'') des Keils angeordnet ist.

6. Vorrichtung nach Anspruch 2, dadurch gekennzeichnet, daß der Keil (5') an einer Feder (6') aufgehängt ist, die gleichzeitig für die Rückstellung des Keils in die Entkupplungslage sorgt.

7. Vorrichtung nach Anspruch 6, dadurch gekennzeichnet, daß ein Zentrierungsmittel wie beispielsweise ein konisches Lager (10,11) vorgesehen ist, das für eine Positionierung des Keils (5') sorgt, wenn dieser sich in der Entkupplungslage befindet.

8. Vorrichtung nach einem der Ansprüche 1 bis 7, dadurch gekennzeichnet, daß der Lenkradträger (3) eine mit ihm fest verbundene zentrale Abdeckung (12) trägt, die sich durch einen Fortsatz (13), der in der Kupplungslage des beweglichen Kupplungsteils (5;5';5'') mit diesem zusammenwirkt, in Richtung des Innenraums der Sicherungsvorrichtung erstreckt.

9. Vorrichtung nach Anspruch 8, dadurch gekennzeichnet, daß der Fortsatz (13) der zentralen Abdeckung (12) eine Rückstellfeder (6;6') stützt, die versucht, das bewegliche Kupplungsteil (5;5') in seine Entkupplungslage zurückzuführen.

10. Vorrichtung nach Anspruch 8, dadurch gekennzeichnet, daß die zentrale Abdeckung (12) durch ein Verriegelungsmittel (15), das zur Einstellung der Winkelposition der zentralen Abdeckung relativ zum Lenkradträger ausgerückt werden kann, mit dem Lenkradträger (3) verbunden ist.

11. Vorrichtung nach Anspruch 10, dadurch gekennzeichnet, daß das Verriegelungsmittel (15) zumindest einen Ansatz (16) hat, der zwischen einer oberen Kupplungslage und einer unteren Entkupplungs- und Einstellage bewegbar ist und eine obere konische Verzahnung (17), die zur Einstellung mit einer an einem von dem Lenkradträger (3) getragenen Kranz (20) vorgesehenen entsprechenden Verzahnung (19) zusammenwirken kann, und eine zylindrische untere Verzahnung (18) hat, die zur Verriegelung mit einer entsprechenden Innenverzahnung (21) des Kranzes zusammenwirkt, wobei der Ansatz ferner einen polygonalen Kopf (22) aufweist, der von außen zugänglich ist und in der oberen Position in einer die zentrale Abdeckung (12) durchsetzenden Durchtrittsöffnung (23) seine Drehung verhindert.

12. Vorrichtung nach einem der Ansprüche 1 bis 11, dadurch gekennzeichnet, daß das Verbindungsteil (7) und das unbewegliche Betätigungselement (8) ein einziges Teil in Form eines langgestreckten Schlüssels (C) bilden, wobei der Lenkradträger (3) dann eine feststehende Hülse (24) hat, in der ein dem Schlüssel zugeordneter drehbarer Zylinder (25) angeordnet ist.

13. Vorrichtung nach Anspruch 12, dadurch gekennzeichnet, daß die feststehende Hülse (24) einen Boden (26) hat, der von einer Durchtrittsöffnung (27) durchbohrt ist, deren Kontur eine Unverwechselbarkeitsfunktion der Hülse ermöglicht.

14. Vorrichtung nach einem der Anspüche 1 bis 11, dadurch gekennzeichnet, daß das Verbindungsteil (7') am Ende der Stange (28) eines Plungers (29) befestigt ist, der als Kolben in einer in dem Lenkradträger (3) angeordneten feststehenden Hülse (24) gleitet, wobei das unbewegliche Betätigungselement (8') dann die Form eines kurzen Schlüssels (C') aufweist, der in einen zugeordneten Zylinder (25) eingeführt werden kann, der zur Betätigung des Plungers in der feststehenden Hülse drehbar ist und/oder gleiten kann.

15. Vorrichtung nach Anspruch 14, dadurch gekennzeichnet, daß das bewegliche Teil ein Keil (5'') ist, der an dem Sockel (1') oder an dem Lenkradträger (3') angelenkt ist und durch einen zweiten, ebenfalls angelenkten Keil (5''') ergänzt wird, wobei die Keile derart angeordnet sind, daß das Verbindungsteil (7') zwischen diese tritt, um sie zum Zweck der Kupplung voneinander zu trennen.

16. Vorrichtung nach einem der Ansprüche 12 bis 15, dadurch gekennzeichnet, daß der drehbare Zylinder (25) mit der feststehenden Hülse (24) derart verbunden ist, daß eine Drehung des in den Zylinder eingeführten Schlüssels (C;C') einen Vorschub des Zylinders in der Hülse und folglich eine Bewegung des Verbindungsteils (7;7') in seine vorgeschobene Lage bewirkt.

17. Vorrichtung nach Anspruch 14 oder 15, dadurch gekennzeichnet, daß der drehbare Zylinder (25') durch ein Ende in Form eines Nockens (30) verlängert ist und daß der Plunger (29) drehfest in der feststehenden Hülse (24) gelagert ist und einen dem anderen Nocken (30) entsprechenden Kopf in Form eines Nockens (31) hat, derart, daß eine Drehung des in den Zylinder (25') eingeführten Schlüssels (C') einen Vorschub des Plungers in der Hülse und folglich eine Bewegung des Verbindungsteils (7') in seine vorgeschobene Lage bewirkt.

18. Vorrichtung nach einem der Ansprüche 12 bis 17, dadurch gekennzeichnet, daß der Lenkradträger (3) ein bewegliches Sperrelement (32) hat, das den Durchtritt des Verbindungsteils (7) versperren kann, wobei dieses Element alleine durch eine normale Drehung des Zylinders betätigt wird, wenn der Schlüssel (C) mit Hilfe eines zugeordneten Decodierungsmittels (33) erkannt worden ist.

19. Vorrichtung nach einem der Ansprüche 12 bis 18, dadurch gekennzeichnet, daß der Schlüssel (C;C') ein Codiermittel (34) hat.

20. Vorrichtung nach einem der Ansprüche 12 bis 19, dadurch gekennzeichnet, daß der Schlüssel (C;C') eigenständige Infrarot-Steuerungsmittel (36) und örtlich festgelegte Beleuchtungsmittel (35) sowie ein Mikromodul (80) hat.

21. Vorrichtung nach einem der Ansprüche 1 bis 20, gekennzeichnet durch Markierungsmittel, die eine Markierung der Position des Lenkrads (4) ermöglichen, wenn dieses sich in der dem Einsatz des unbeweglichen Betätigungselements (8,8') entsprechenden Winkelposition befindet, um jedes erneute Einsetzen dieses Elements zu erleichtern.

22. Vorrichtung nach einem der Ansprüche 1 bis 21, gekennzeichnet durch ein Rückstellmittel (37,38), das versucht, das Lenkrad (4) in natürlicher Weise in die genannte Winkelposition zurückzuführen, wenn das Lenkrad nach Herausziehen des unbeweglichen Betätigungselements (8;8') von der Lenksäule gelöst worden ist.

23. Vorrichtung nach Anspruch 22, dadurch gekennzeichnet, daß das Rückstellmittel eine Unwuchtmasse (37) ist, die seitlich an der Lenkradstütze (3) befestigt ist.

24. Vorrichtung nach Anspruch 22, dadurch gekennzeichnet, daß das Rückstellmittel (38) durch einen Rollkörper (39) gebildet ist, der durch eine Feder (40) belastet ist und in Anlage an dem geneigt verlaufenden Boden (41) einer Nut (42) gehalten wird, die in einem mit dem Sockel (1) fest verbundenen Kranz (43) vorgesehen ist.

25. Vorrichtung nach Anspruch 21 und 24, dadurch gekennzeichnet, daß der Boden der Nut (41) eine Mulde hat, in die der Rollkörper (39) eindringen kann, wobei die Mulde in Übereinstimmung mit der markierten Winkelposition des Lenkrads (4) positioniert ist, derart, daß der Rollkörper sowohl ein Rückstellmittel als auch ein Markierungsmittel für das Lenkrad bildet.

26. Vorrichtung nach einem der Ansprüche 1 bis 25, dadurch gekennzeichnet, daß der Sockel (1) auf einen polygonalen oder entsprechenden Fortsatz (44) der Lenksäule (2) gesteckt ist, derart, daß die drehfeste Kupplung sichergestellt wird, wobei die Blockierung in der Translationsrichtung durch eine Abziehsicherung (45) sichergestellt wird, die an dem Fortsatz montiert ist.

27. Vorrichtung nach einem der Ansprüche 1 bis 25, dadurch gekennzeichnet, daß der Sockel (1') einstückig mit der Lenksäule (2) ausgebildet ist.
